# EUROPÄISCHE PATENTSCHRIFT

(11) **EP 0 990 769 B1**
(45) Veröffentlichungstag und Bekanntmachung des Hinweises auf die Patenterteilung: **10.11.2004**
(21) Anmeldenummer: 99250342.5
(22) Anmeldetag: 27.09.1999
(51) Int. Cl.: E21D 15/502, B23P 15/10, B21C 23/20, B21K 1/76

(54) **Verfahren zur Herstellung eines Zylinders mit einer Auswölbung**
Method of making a cylinder having a longitudinal rib
Procédé de fabrication d'un cylindre comportant une extension longitudinale

(30) Priorität: 28.09.1998 DE 19845835
(43) Veröffentlichungstag der Anmeldung: 05.04.2000
(73) Patentinhaber: V & M Deutschland GmbH, 40472 Düsseldorf (DE)
(72) Erfinder: Nickel, Wilhelm, 45481 Mülheim (DE); Schmitz, Theodor, 41515 Grevenbroich (DE); Schmidt, Wilfried, 40699 Erkrath (DE); Schlüssel, Hans-Jürgen, 41542 Dormagen (DE)
(74) Vertreter: Meissner, Peter E., Dipl.-Ing.

(56) Entgegenhaltungen:
- DE-A- 1 929 147
- FR-A- 870 997
- GB-A- 712 352
- GB-A- 2 027 619

## Beschreibung

Die Erfindung betrifft ein Verfahren zur Herstellung eines Zylinders mit mindestens einer nach außen und über die Länge sich erstreckenden Auswölbung und mit einem Boden aus Stahl für eine Kolbenzylindereinheit.

In modernen Bergwerken, insbesondere Kohlegruben wird in vollmechanisierten Betrieben mit einem selbsttätig schreitenden Ausbau gearbeitet. Der das Hangende abstützende Schreitausbau weist mindestens zwei, je nach Größe auch vier Hydraulikzylinder auf. In der Vergangenheit hat es bei der Anordnung der außenliegenden hydraulischen Leitungen an den Hydraulikzylindem Probleme gegeben, da bedingt durch den rauhen Betrieb immer wieder die außenliegenden Hydraulikleitungen beschädigt oder sogar zerstört worden sind. Aus diesem Grunde sind Zylinder mit Auswölbungen entwickelt worden, bei denen in der nach außen sich erstreckenden Auswölbung Hydraulikkanäle untergebracht sind, so daß diese vor dem herabstürzenden Gestein geschützt sind. Bei der bisher bekannten Herstellung solcher Zylinder wird von einem Schmiedestück ausgegangen, das allseitig mechanisch bearbeitet wird. Der Boden wird separat hergestellt und mit dem zylindrischen Teil verbunden. Dieses bekannte Verfahren ist hinsichtlich der Verbrauchsziffer und von der Taktzeit her als ungünstig anzusehen.

Aus der DE-OS 1929147 ist ein Verfahren zur Herstellung von Zugtöpfen für Mittelpufferkupplungsfederpatronen bekannt. Bei diesem Verfahren werden die Zugtöpfe mit angepressten Ohren in einem Pressvorgang durch Rückwärtshohlfließpresen erzeugt.
Beim Stauchen des Einsatzmaterials in Form eines Vierkant-Rund- oder Rechteckblockes werden die Ohren mit verkürztem Abstand zum Fuss des Zugtopfes in die Pressform eingedrückt, die beim Rückwärtshohlfließprozess aus der Pressform in die Endlage steigen. Die Anzahl der Ohren ist durch entsprechende Gravur der Pressbacken veränderbar.

Es ist deshalb Aufgabe der Erfindung, ein Verfahren zur Herstellung eines Zylinders der gattungsmäßigen Art anzugeben, das sowohl hinsichtlich der Verbrauchsziffer, d. h. dem Verhältnis von Einsatzgewicht zu Fertiggewicht und von der Taktzeit her günstiger ist im Vergleich zu dem bekannten Herstellverfahren.

Gelöst wird diese Aufgabe erfindungsgemäß durch ein Verfahren zur Herstellung eines Zylinders mit mindestens einer nach außen und über die Länge sich erstreckenden Auswölbung und mit einem Boden aus Stahl für eine Kolbenzylindereinheit durch Fließpressen eines auf Umformtemperatur erwärmten Metallblocks über einen Dom, wobei ein geschopfter Rundingot oder ein Rundstranggußblock vor der Erwärmung auf Umformtemperatur zwischen 1250°C und 1310°C mechanisch auf Maß bearbeitet und nach der Erwärmung die gesamte Oberfläche des Einsatzstückes mit Preßwasser entzundert wird und danach der so vorbereitete Metallblock in eine mit einem mit der Auswölbung komplementären Hohlraum versehenen Matrize eingelegt und mittels des Domes in einem Arbeitsgang zur Bildung eines Lochstückes mit einem Boden stark steigend gelocht wird, wobei vor dem Lochen auf die Matrize und den Dom ein Schmiermittel aufgetragen wird, danach das mit einem Boden versehene Lochstück aus der Matrize ausgeschoben, abgekühlt und entzundert und abschließend mechanisch fertig bearbeitet wird.

Vorteilhafte Weiterbildungen des Verfahrens sind Bestandteil von Unteransprüchen.

Erfindungsgemäß wird ein geschopfter Rundingot oder ein Rundstranggußblock vor der Erwärmung auf eine Temperatur zwischen 1250 und 1310° C mechanisch auf Maß bearbeitet, vorzugsweise durch Drehen mit einer Rauheit von R_{z} ≤ 80. Nach der Erwärmung wird die gesamte Oberfläche mit Preßwasser bei 300 · 10⁵ Pa entzundert und der Block nach Einsatz in Matrize mittels eines Dornes stark steigend gelocht. Dabei wird der Block bezogen auf die Ausgangslänge um mindestens das 1,5-fache bis 2,5-fache gelängt. Der Dorn locht den Block nicht durch, sondern beläßt einen Boden. Vor dem Lochen wird auf die Matrize und den Dom ein Schmiermittel aufgetragen. Dieses ist vorzugsweise ein mit Wasserglas versetztes Gemisch aus Glaspulver und Reingraphit im Verhältnis 1:1. Nach dem Ausschieben des Lochstückes aus der Matrize wird nach dem Abkühlen die äußere Oberfläche entzundert. Abschließend erfolgt eine mechanische Bearbeitung. Je nach Werkstoff und Anforderung kann eine Wärmebehandlung erforderlich sein, die nach dem Ausschieben des Lochstückes aus der Matrize und vor der Entzunderung erfolgt. Vorzugsweise ist die Wärmebehandlung eine Wasservergütung. Üblicherweise ist die Matrize vertikal angeordnet, aber auch eine horizontale Lage ist möglich.

Der Vorteil des stark steigenden Lochens ist, daß das Material auch radial verdrängt wird, so daß die die Auswölbung bildenden Hohlräume der Matrize über eine ausreichende Länge voll ausgefüllt werden. Bedingung dabei ist, daß der Dom nahezu mittenzentrisch auf dem Block aufgesetzt wird. Zu große Abweichungen führen zum Ausschuß, da die Auswölbung nur teilweise aufgefüllt wird. Die genaue Mittenlage des Dornes wird in der Weise ermittelt, daß der Dom im kalten Zustand ein Stück in die Matrize eingefahren und radial der Abstand zur Matrize vermessen wird. Durch radiales Verschieben der Matrize erfolgt eine genaue Einjustierung. Zur Unterstützung eines mittigen Aufsetzens des Dornes wird ein Abschnitt des Einsatzblockes zu einem zylindrischen und der zweite Abschnitt zu einem konischen Körper mechanisch bearbeitet, wobei dieser Abschnitt in die Matrize eingesetzt wird. Die Durchmessertoleranz der beiden Abschnitte liegt im Plusbereich, so daß ein zentrierendes Einsetzen des Blockes in die Matrize sichergestellt ist.

Durch das steigende Lochen wird der Dom und die Matrize thermisch hoch belastet und es ist deshalb erforderlich, daß vor Einsatz des nächsten Blockes sowohl der Dom als auch die Matrize stark rückgekühlt werden. Aus maßlichen Gründen und im Hinblick auf eine Reduzierung des Umfanges der mechanischen Endbearbeitung liegt die Konizität der Matrize bei 0,75 %. Dies reicht gerade aus, damit das Lochstück mittels des Auswerfers aus der Matrize geschoben werden kann.

Die Matrize ist längsgeteilt und weist eine der zu erzeugenden Form entsprechende Querschnittskontur auf. Im Prinzip kann man durch Hobeln die Matrize auch einstückig herstellen. Das bereitet aber große Schwierigkeiten und die Feinbearbeitung ist problematisch. Einfacher ist es, einen Hohlblock herzustellen, diesen längszuteilen und jede Hälfte, vorzugsweise durch Fräsen mechanisch zu bearbeiten. Damit das Bearbeitungswerkzeug ungehinderten Auslauf hat, wird der separat hergestellte Bodenring mittels Dehnschrauben mit der Matrize verbunden.

In der Zeichnung wird anhand eines Ausführungsbeispieles das erfindungsgemäße Verfahren näher erläutert. Es zeigen:
- Figur 1a-e: die erfindungsgemäß wesentlichen Arbeitsschritte zur Herstellung eines Zylinders mit zwei einander gegenüberliegenden Auswölbungen
- Figur 2: eine erfindungsgemäß ausgebildete Matrize
- Figur 3a: ein gepreßtes Lochstück
- Figur 3b: einen fertig bearbeiteten Zylinder
- Figur 4: einen mechanisch bearbeiteten Einsatzblock
- Figur 5a: ein gepreßtes Lochstück mit nur einer Auswölbung im Schnitt A-A in Figur 5b
- Figur 5b: eine Ansicht in Richtung X in Figur 5a

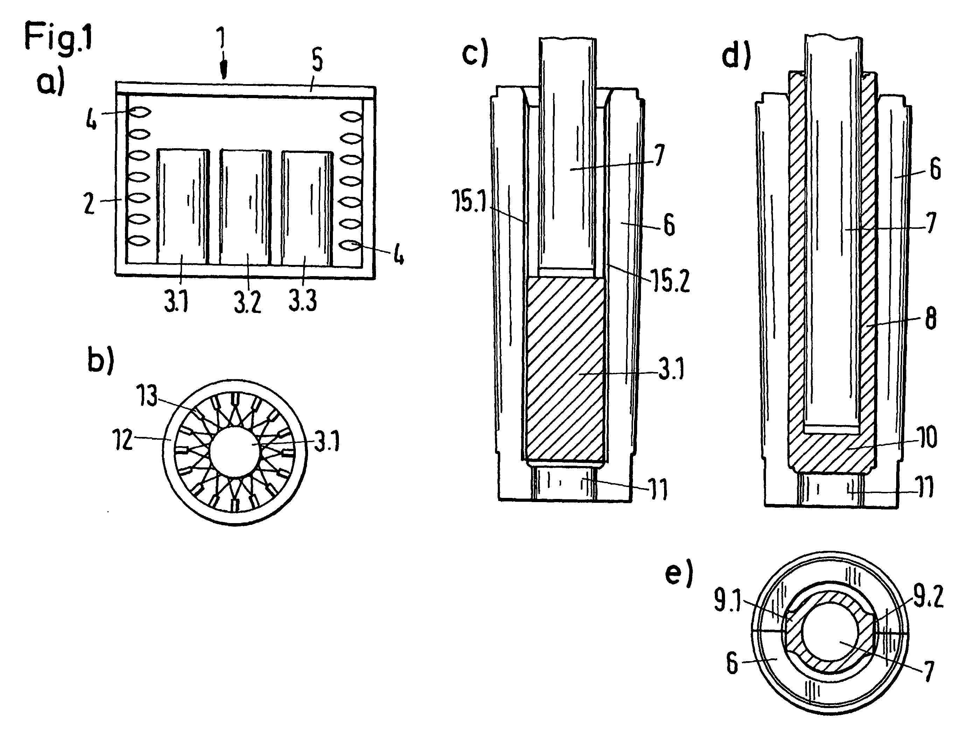

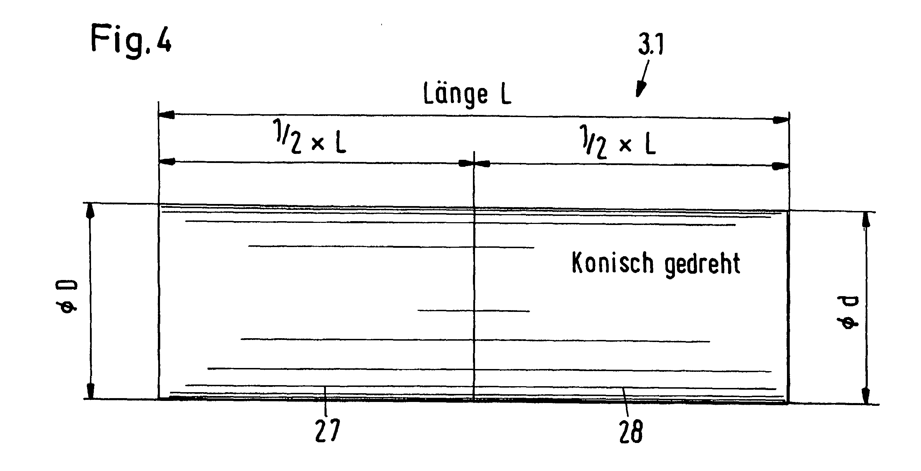

In Figur 1a-e sind in schematischer Form die erfindungsgemäß wesentlichen Arbeitsschritte zur Herstellung eines Zylinders mit zwei einander gegenüberliegenden Auswölbungen dargestellt. Diese Art von Zylinder werden auch als Flossenzylinder bezeichnet. Teilbild a zeigt einen mit Gas beheizten Tiefofen 1, auf dessen Boden 2 entsprechend dieser Darstellung drei zu erwärmende geschopfte und mechanisch bearbeitete (Figur 4) Blöcke 3.1, 3.2, 3.3 aufgestellt sind. Die Gasbeheizung des Tiefofens 1 ist symbolisch durch Flammen 4 gekennzeichnet. Der oben normalerweise offene Teil des Tiefofens 1 wird während der Erwärmung durch einen verschiebbaren Deckel 5 verschlossen gehalten.

Im Teilbild b ist die Hochdruckentzunderung eines Blockes 3.1 dargestellt. Dazu wird ein Spülring 12 zentrisch zum Block 3.1 angeordnet und die Mantelfläche des Blockes 3.1 unter hohem Druck mittels der über in Umfangsrichtung angeordneten Düsen 13 mit Wasser beaufschlagt. Der Druck liegt bei ca. 300 bar. Der Spülring 12 wird dabei entlang der Achse des Blockes 3.1 auf- und abbewegt. Nicht dargestellt ist die Entzunderung der beiden Deckflächen des Blockes 3.1.

Teilbild c zeigt im Längsschnitt den Arbeitsschritt des Einsetzens des entzunderten Blockes 3.1 in die Matrize 6 und das Aufsetzen des Dornes 7 auf die obere Deckfläche des Blockes 3.1. Gut zu erkennen ist, daß in diesem Stadium des Herstellprozesses die Flossenabschnitte 15.1, 15.2 der Matrize 6 noch nicht ausgefüllt sind.

Teilbild d zeigt im Längsschnitt die Matrize 6, den Dom 7 und das gepreßte Lochstück 8. Der Draufsicht im Teilbild e ist zu entnehmen, daß durch das stark steigende Lochen die die Flossen 9.1, 9.2 bildenden Hohlräume voll mit Material aufgefüllt sind. Der eingesetzte Block wird nicht voll durchgelocht, sondern es bleibt ein Boden 10 stehen. Ein unten in der Presse angeordneter Auswerfer 11 schiebt nach dem Pressen das Lochstück 8 nach oben, wobei die leichte Konizität der Matrize 6 unterstützend wirkt.

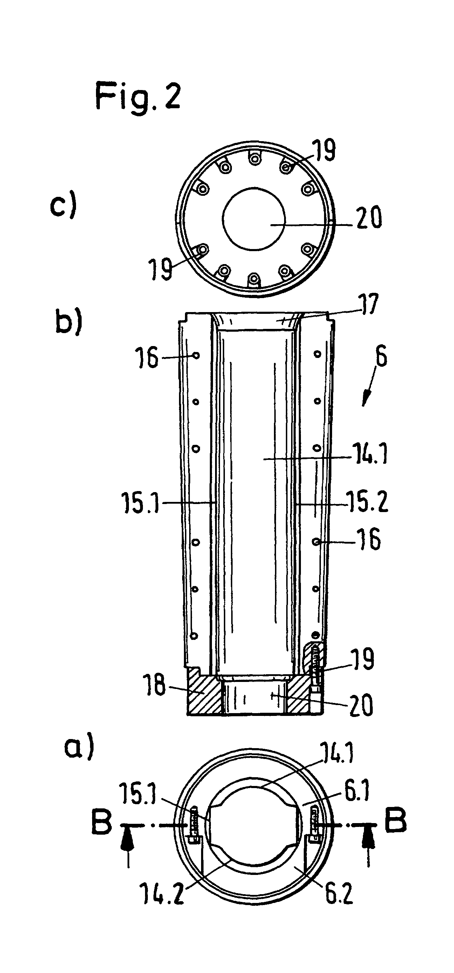

Figur 2 zeigt die Einzelheiten der Matrize. Die Matrize 6 ist gemäß Teilbild a längsgeteilt mit zwei Halbschalen 6.1, 6.2. Deutlich zu erkennen in dieser Darstellung ist, daß die Innenfläche der beiden Halbschalen 6.1, 6.2 eine entsprechend dem herzustellenden Flossenzylinder angepaßte Querschnittskontur aufweist. Die Querschnittskontur ist im wesentlichen gekennzeichnet durch zwei einander gegenüberliegende Kreisbogenabschnitte 14.1, 14.2, die dann übergehen in den Flossenabschnitt 15.1, 15.2. In diesem Ausführungsbeispiel schließt der Flossenabschnitt 15.1, 15.2 gerade ab, kann aber auch beispielsweise nach außen etwas gerundet sein.

Teilbild b zeigt einen Schnitt B-B im Teilbild a. In diesem Schnitt sind die die beiden Halbschalen 6.1, 6.2 verbindenden Dehnschrauben 16 zu erkennen, die über die Länge der Matrize 6 verteilt angeordnet sind. Am oberen offenen Ende weist die Matrize 6 einen trichterförmig angeformten Abschnitt 17 auf, der dann übergeht in die im Teilbild a dargestellte Querschnittskontur. Am unteren offenen Ende ist ein Bodenring 18 angeordnet, der über Dehnschrauben 19 mit der Matrize 6 verbunden ist.

Teilbild c zeigt die Unterseite der Matrize mit der Öffnung 20 für die Anordnung des Auswerfers 11 (Figur 1d) und die über den Umfang verteilt angeordneten Dehnschrauben 19.

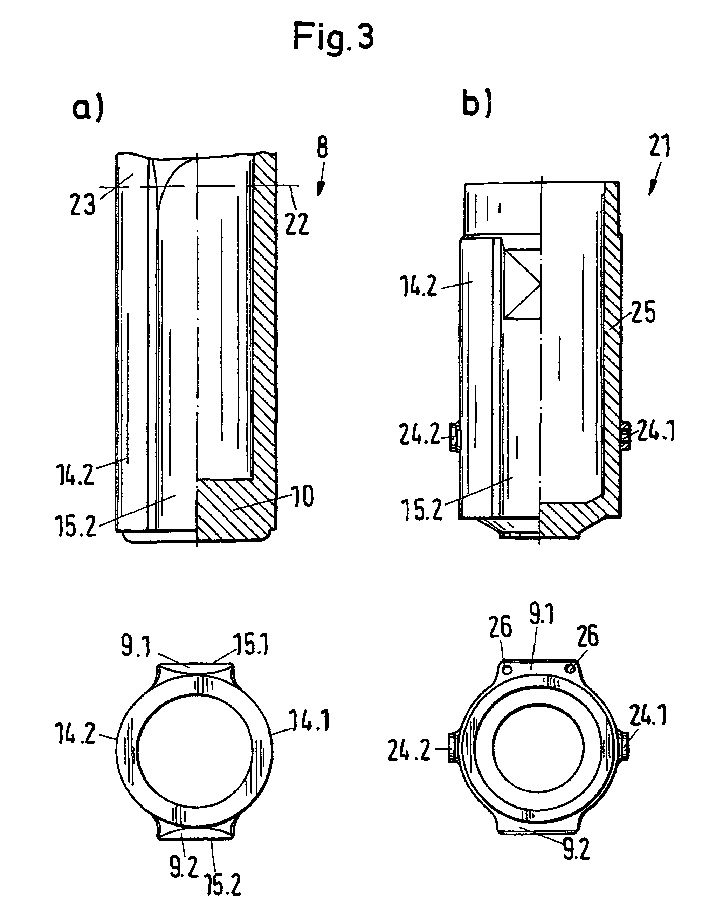

Figur 3 zeigt im Teilbild a in einem halbseitigen Längsschnitt und in einer halbseitigen Ansicht sowie einer Draufsicht das gepreßte Lochstück 8 und im Teilbild b den fertigbearbeiteten Flossenzylinder 21.

Im direkten Vergleich zwischen dem Teilbild a und dem Teilbild b erkennt man, daß der oberhalb der gestrichelten Linie 22 liegende Teil 23 des Lochstückes 8 abgetrennt wird. Im unteren Drittel des zylindrischen Teiles wird rechts und links je ein Auge 24.1, 24.2 angeschweißt, damit der Flossenzylinder 21 schwenkbar in der hier nicht dargestellten Kolbenzylindereinheit angeordnet werden kann. Der Boden 10 des Lochstückes 8 wird mechanisch bearbeitet, so daß er eine den Aufstellungsbedingungen angepaßte Kontur erhält. Die Innenfläche 25 des Lochstückes 8 wird feingedreht und gehont, so daß in ihr der Kolben der Kolbenzylindereinheit gleiten kann.

In der Draufsicht sind im Teilbild b die hier in der obenliegenden Flosse 9.1 angeordneten Kanäle 26 dargestellt. Je nach Erfordernis können auch in der gegenüberliegenden Flosse 9.2 Kanäle angeordnet werden.

Figur 4 zeigt beispielhaft einen mechanisch bearbeiteten Block 3.1 vor dem Einsatz in den Tiefofen 1 (Figur 1a). Ein erster Abschnitt 27 des Blockes 3.1 wird zu einem zylindrischen Körper mit dem Durchmesser D mechanisch bearbeitet. Ein zweiter daran anschließender Abschnitt 28 wird zu einem konischen Körper mit dem Ausgangsdurchmesser D und dem Enddurchmesser d mechanisch bearbeitet. Beide Durchmesser weisen ein Toleranzfeld von Null bis plus x auf. Beispielsweise beträgt der Wert x einen Millimeter. Vorzugsweise hat jeder Abschnitt 27, 28 die gleiche Länge, wobei diese der halben Einsatzlänge L entspricht. Die Durchmesserdifferenz zwischen D und d liegt bei einigen Millimetern, vorzugsweise bei fünf Millimetern.

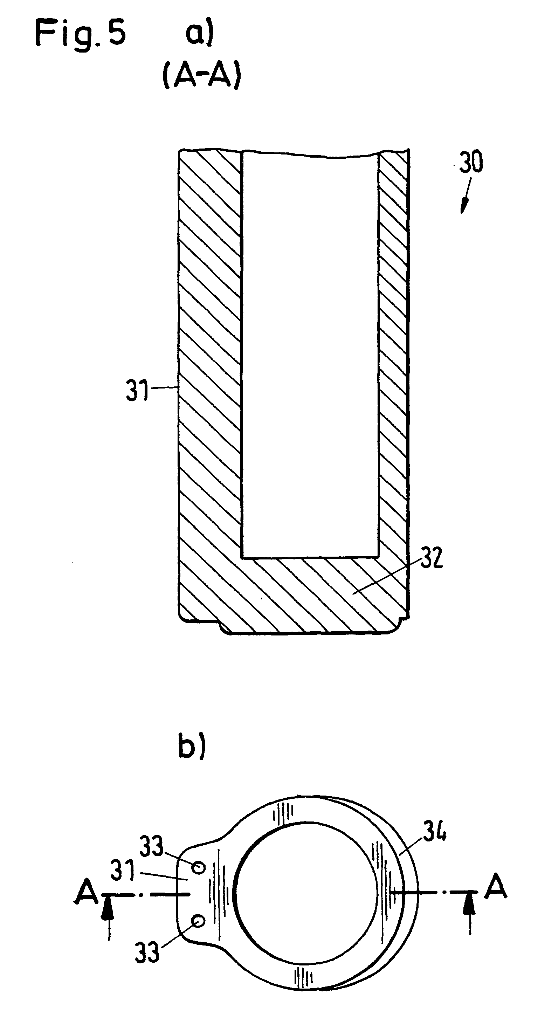

In Figur 5a und 5b ist in einem Schnitt und in einer Ansicht ein gepreßtes Lochstück 30 mit nur einer Auswölbung 31 dargestellt. Auch dieses Lochstück 30 weist einen angepreßten Boden 32 auf, der integraler Bestandteil des Lochstückes 30 ist. In der Auswölbung 31 können vergleichsweise wie in Figur 3b dargestellt, Kanäle 33 für die Hydraulikleitungen angeordnet werden. Das nur eine Auswölbung 31 aufweisende Lochstück 30 ist schwieriger herzustellen als der zuvor beschriebene Flossenzylinder 21 (Figur 3), da während des Lochprozesses der Dom 7 (Figur 1c, 1d) leichter verlaufen kann. Gegensteuern kann man beispielsweise in der Art, daß auf der der Auswölbung 31 gegenüberliegenden Seite mehr Material 34 stehen bleibt - wie mit den gestrichelten Linien in Figur 5b angedeutet - ohne direkt eine signifikante zweite Auswölbung zu bilden.

## Patentansprüche

1. Verfahren zur Herstellung eines Zylinders mit mindestens einer nach außen und über die Länge sich erstreckenden Auswölbung und mit einem Boden aus Stahl für eine Kolbenzylindereinheit durch Fließpressen eines auf Umformtemperatur erwärmten Metallblocks über einen Dom, wobei ein geschopfter Rundingot oder ein Rundstranggußblock vor der Erwärmung auf Umformtemperatur zwischen 1250°C und 1310°C mechanisch auf Maß bearbeitet und nach der Erwärmung die gesamte Oberfläche des Einsatzstückes mit Preßwasser entzundert wird und danach der so vorbereitete Metallblock (3.1 - 3.3) in eine mit einem mit der Auswölbung komplementären Hohlraum versehenen Matrize (6) eingelegt und mittels des Dornes (7) in einem Arbeitsgang zur Bildung eines Lochstückes (8) mit einem Boden (10) stark steigend gelocht wird, wobei vor dem Lochen auf die Matrize (6) und den Dom (7) ein Schmiermittel aufgetragen wird, danach das mit einem Boden (10) versehene Lochstück (8) aus der Matrize (6) ausgeschoben, abgekühlt und entzundert und abschließend mechanisch fertig bearbeitet wird.

2. Verfahren nach Anspruch 1,
**dadurch gekennzeichnet,**
**dass** ein erster Abschnitt (27) des Einsatzblockes (3.1) zu einem zylindrischen und ein zweiter Abschnitt (28) zu einem konischen Körper mechanisch bearbeitet wird, wobei der sich verringernde Durchmesser (d) des konischen Körpers einer endseitigen Stirnfläche zugewandt ist.

3. Verfahren nach Anspruch 1 und 2,
**dadurch gekennzeichnet,**
**dass** jeder Abschnitt (27,28) gleich lang ist und die jeweilige Länge der halben Länge (L) des Einsatzblockes (3.1) entspricht, und die Durchmessertoleranz für jeden Abschnitt (27,28) im Plusbereich liegt.

4. Verfahren nach einem der Ansprüche 1 - 3,
**dadurch gekennzeichnet,**
**dass** die mechanische Bearbeitung des Einsatzblockes (3.1) ein Drehen ist mit einer Rauheit von R_{z} ≤ 80.

5. Verfahren nach Anspruch 1,
**dadurch gekennzeichnet,**
**dass** vor Einsatz des erwärmten Blockes die Mittenlage des Domes (7) zur Matrize (6) einjustiert wird.

6. Verfahren nach einem der Ansprüche 1 - 5,
**dadurch gekennzeichnet,**
**dass** der erwärmte Block (3.1-3.3) bezogen auf die Ausgangslänge mindestens um das 1,5-fache bis 2,5-fache steigend gelocht wird.

7. Verfahren nach einem der Ansprüche 1 - 6,
**dadurch gekennzeichnet,**
**dass** nach Ausschieben des Lochstückes (8) aus der Matrize (6) der Dom (7) und die Matrize (6) stark rückgekühlt wird.

8. Verfahren nach Anspruch 1,
**dadurch gekennzeichnet,**
**dass** das Schmiermittel ein mit Wasserglas versetztes Gemisch aus Glaspulver und Reingraphit im Verhältnis 1:1 ist.

9. Verfahren nach einem der Ansprüche 1 - 8,
**dadurch gekennzeichnet,**
**dass** der mechanisch bearbeitete Einsatzblock (3.1) mit dem konisch ausgebildeten Abschnitt (28) in die Matrize (6) eingesetzt wird.

10. Verfahren nach einem der Ansprüche 1 - 9,
**dadurch gekennzeichnet,**
**dass** nach dem Ausschieben des Lochstückes (8) aus der Matrize (6) und vor der Entzunderung der äußeren Oberfläche das Lochstück (8) einer Wärmebehandlung unterworfen wird.

## Claims

1. Method of producing a cylinder with at least one rib protrusion that extends outwards and over the entire length and with a base made of steel for a piston cylinder unit, by extruding a metal block heated to forming temperature over a dome, whereby a cropped round ingot or a continuously cast round block is machined to size prior to the heating process to the forming temperature of between 1250 °C and 1310 °C, and after the heating process the entire surface of the piece is descaled with pressurised water, and after which the metal block (3.1 - 3.3) prepared in this way is placed into a die (6) which has a cavity that is complementary to the rib protrusion, and is stamped in a strongly increasing manner by means of the dome (7) in an operation to form a pierced blank (8) with a base (10), whereby a lubricant is applied, prior to the stamping process, to the die (6) and the dome (7), and after this the pierced blank (8) that has been provided with a base (10) is pushed out of the die (6), cooled and descaled, and is then finish-machined.

2. Method as in Claim 1,
**characterised in that**
a first section (27) of the block (3.1) is machined to form a cylindrical body, and a second section (28) is machined to form a tapered body, the decreasing diameter (d) of the tapered section facing towards an end face.

3. Method as in Claim 1 and 2,
**characterised in that**
each section (27, 28) is of the same length, and the length in each case is equal to half the length (L) of the block (3.1), and the diameter tolerance for each section (27, 28) is in the positive range.

4. Method as in one of Claims 1 to 3,
**characterised in that**
the machining of the block (3.1) is a turning process with a surface roughness of R_{z} ≤ 80.

5. Method as in Claim 1,
**characterised in that**
the centre position of the dome (7) in relation to the die (6) is aligned before the heated block is inserted.

6. Method as in one of Claims 1 to 5,
**characterised in that**
the heated block (3.1 - 3.3) is stamped to increase by at least 1.5 times to 2.5 times in relation to its initial length.

7. Method as in one of Claims 1 to 6,
**characterised in that**,
after the removal of the pierced blank (8) from the die (6), the dome (7) and the die (6) are intensely re-cooled.

8. Method as in Claim 1,
**characterised in that**
the lubricant is a mixture of glass powder and pure graphite in the ratio of 1 : 1, mixed with water glass.

9. Method as in one of Claims 1 to 8,
**characterised in that**
the machined block (3.1) is inserted into the die (6) with the tapered section (28) first.

10. Method as in one of Claims 1 to 9,
**characterised in that**,
after the pierced blank (8) is pushed out of the die (6) and before the descaling of the outer surface, the blank (8) is subjected to a heat treatment.

## Revendications

1. Procédé destiné à la fabrication d'un cylindre, comportant au moins une voussure s'étendant vers l'extérieur et sur la longueur, et un fond en acier pour une unité à piston et cylindre, par extrusion au moyen d'un mandrin d'un bloc métallique porté à température de déformation, dans lequel un rondin ébouté ou un bloc de coulée continu rond est usiné mécaniquement à dimension avant le chauffage à la température de déformation comprise entre 1 250 °C et 1 310 °C, et l'ensemble de la surface de la pièce d'insert est décalaminé après le chauffage avec de l'eau sous pression, et le bloc métallique (3.1 à 3.3) ainsi préparé étant ensuite introduit dans une matrice (6) munie d'un espace creux complémentaire à la voussure, et perforé de façon fortement croissante en une phase de travail au moyen du mandrin (7) pour la réalisation d'une pièce perforée (8) avec un fond (10), un lubrifiant étant appliqué sur la matrice (6) et sur le mandrin (7) avant la perforation, la pièce perforée (8) pourvue d'un fond (10) étant ensuite retirée de la matrice (6), refroidie et décalaminée, et soumise finalement à un usinage mécanique de finition.

2. Procédé selon la revendication 1,
**caractérisé en ce qu'**un premier tronçon (27) du bloc d'insert (3.1) est usiné mécaniquement en un corps cylindrique, et **en ce qu'**un deuxième tronçon (28) est usiné mécaniquement en un corps conique, le diamètre (d) du corps conique se réduisant étant orienté vers une face frontale d'extrémité.

3. Procédé selon la revendication 2,
**caractérisé en ce que** la longueur de chaque tronçon (27, 28) est identique, **en ce que** la longueur respective correspond à la moitié de la longueur (L) du bloc d'insert (3.1), et **en ce que** la tolérance diamétrale de chaque tronçon (27, 28) se situe dans la plage positive.

4. Procédé selon l'une quelconque des revendications 1 à 3,
**caractérisé en ce que** l'usinage mécanique du bloc d'insert (3.1) est un usinage au tour avec une rugosité R_{z} ≤ 80.

5. Procédé selon la revendication 1,
**caractérisé en ce que**, avant l'insertion du bloc chauffé, la position médiane du mandrin (7) est ajustée par rapport à la matrice (6).

6. Procédé selon l'une quelconque des revendications 1 à 5,
**caractérisé en ce que**, par rapport à la longueur de départ, le bloc chauffé (3.1 à 3.3) est perforé de façon croissante d'au moins 1,5 fois à 2,5 fois.

7. Procédé selon l'une quelconque des revendications 1 à 6,
**caractérisé en ce que**, après le retrait de la pièce perforée (8) de la matrice (6), le mandrin (7) et la matrice (6) sont fortement refroidis en retour.

8. Procédé selon la revendication 1,
**caractérisé en ce que** le lubrifiant est un mélange de verre pulvérisé et de graphite pur d'un rapport de 1/1 auquel est ajouté du verre soluble.

9. Procédé selon l'une quelconque des revendications 1 à 8,
**caractérisé en ce que** le bloc d'insert (3.1) usiné mécaniquement est inséré dans la matrice (6) avec le tronçon (28) de forme conique.

10. Procédé selon l'une quelconque des revendications 1 à 9,
**caractérisé en ce que**, après le retrait de la pièce perforée (8) de la matrice (6), et avant le décalaminage de la surface extérieure, la pièce perforée (8) est soumise à un traitement thermique.
